# EUROPEAN PATENT APPLICATION

(11) **EP 4 821 762 A1**
(43) Date of publication of application: **14.10.2026**
(21) Application number: 25170139.7
(22) Date of filing: 11.04.2025
(51) Int. Cl.: B60R 1/29, B60R 11/04

(54) **DRIVER MONITORING SYSTEMS IN A VEHICLE AND POSITION THEREOF**

(71) Applicant: Motherson Innovations Deutschland GmbH, 70327 Stuttgart (DE)
(72) Inventor: Karacsony, Csaba, 9173 Gyorladamér (HU); Poller, Barna, 8175 Balatonfuzfo (HU); Ori, Balazs, 9400 Sopron (HU); Varhelyi-Toth, Gergely, 9245 Mosonszolnok (HU); Radnai, Robert, 9200 Mosonmagyarovar (HU)

(57) **Abstract**

A vehicle 100 comprising a vehicle cabin 200 that includes a steering wheel 90 used for the vehicle control. An image capturing device 10 is strategically positioned within a defined area of the cabin that is demarcated by two vertical planes and two horizontal planes. In a left-side driving configuration, the first vertical plane 32 and the second vertical plane 32a are both located to the right of the steering wheel 90. Conversely, in a right-side driving configuration, these planes are both positioned to the left of the steering wheel 90. A substantially first horizontal plane 38, 38a and a substantially second horizontal plane 33. The first horizontal plane 38 is defined by the dashboard 80 or by an upper anatomical viewing limit 38a for a driver's eye 70, and the second horizontal plane is defined 33 by an upper limiting surface of the vehicle cabin 200.

## Description

The present invention relates to a vehicle.

Driver monitoring systems have become increasingly important in modem vehicles to enhance safety and improve overall driving experience. These systems typically utilize image capturing devices, such as cameras, to observe the driver's behaviour, alertness, and attentiveness while operating the vehicle.

The positioning of image capturing devices within a vehicle's cabin presents several challenges. The placement must ensure a clear and unobstructed view of the driver while not interfering with the driver's field of vision or the vehicle's interior design. Additionally, the device must be able to accommodate drivers of varying heights, sizes, and seating positions. Traditional fixed-position cameras often struggle to maintain an optimal view of the driver due to these variations. As a result, the effectiveness of driver monitoring systems may be compromised, potentially missing critical information about the driver's state.

US10427690B2 relates a driver monitoring system that uses image sensors to detect driver drowsiness and inattention, highlighting the critical role these systems play in vehicle safety.

US20230019596A1 relates to a driver monitoring system that uses the head up display making a virtual image that appears through a windshield visible to the driver of the vehicle, and the driver monitoring camera further captures an image of such driver, but this approach can increase complexity and cost.

EP4170607A1 discusses a solution involving a camera mounted in the steering column because the driver typically adjusts the body in accordance with the steering column, but this may not be suitable for all vehicle interiors.

US10116873 B1 relates a system using multiple cameras to capture different views of the vehicle interior, but this approach may also increase complexity and cost.

Furthermore, the limited space within a vehicle's cabin and the need to comply with safety regulations and ergonomic standards further constrain the possible locations for mounting the image capturing device. This makes it challenging to find a single, universally suitable position for the device that works for all drivers and vehicle models.

Previous attempts to address these issues have included using multiple image capturing devices or wide-angle lenses. However, these solutions often result in increased costs, complexity, and potential distortion of the captured images.

There is, therefore, a need for an improved system that may effectively capture images of the driver while adapting to various driver positions and vehicle interior configurations. The present disclosure relates to a vehicle configured to enhance driver monitoring and safety through the integration of an image capturing device strategically positioned within a cabin of the vehicle. Such a system should be able to maintain a consistent view of the driver's eyes, head, and upper body, regardless of individual differences or changes in driving position. The system should also be robust, cost-effective, and easily integrated into various vehicle models without compromising interior aesthetics or safety standards.

In an aspect, the vehicle comprising a vehicle cabin, a dashboard configured inside the vehicle cabin, a steering wheel positioned within the vehicle cabin for steering the vehicle, an image capturing device positioned within a defined area of the vehicle cabin and having a field of view towards an inner side of the vehicle cabin towards a driver.

In an aspect of the present disclosure, the defined area is bounded by a first vertical plane and a second vertical plane. Both these vertical planes are defined relative to a centre of the steering wheel, such that: in a left-side driving configuration of the vehicle, the first vertical plane and the second vertical plane are both positioned to the right from the centre of the steering wheel; or in a right-side driving configuration of the vehicle, the first vertical plane and the second vertical plane are both positioned to the left from the centre of the steering wheel. In another aspect of the present disclosure, a substantially first horizontal plane and a substantially second horizontal plane are defined inside the cabin. The first horizontal plane is defined by a dashboard or a plane defined by an upper anatomical viewing limit for a driver's eye . The second horizontal plane defined is defined as an upper limiting surface of the cabin. The defined area provides a flexibility in installation of the image capturing device in the cabin. This approach also provides adaptability across various vehicle models while maintaining system effectiveness.

In an aspect, a control unit configured to control/adjust the field of view of the image capturing device in the event of a movement of the driver.

In another aspect, the first vertical plane is defined 5 degrees from the centre of the steering wheel, and/or the second vertical plane is defined 25 degrees from the centre of the steering wheel.

In another aspect, the anatomical viewing limit for a driver's eye ranges from 20 degrees to 45 degrees from a horizontal line substantially parallel to a ground, preferably 23 degrees to 43 degrees from the horizontal line substantially parallel to a ground. This ensures that the image capturing device not obstructing view of the driver while driving the vehicle.

In an aspect of the present disclosure, the image capturing device configured with a pan-tilt-zoom mechanism to allow adjustment in the field of view of the image capturing device. The pan-tilt-zoom mechanism allows for dynamic adjustment of the field of view of the image capturing device. This mechanism ensures that the driver's eyes, head, and/or upper body are consistently maintained within the field of view of the image capturing device, regardless of variations in driver size, seating position, or movement during driving. In addition, as the pan-tilt-zoom mechanism maintains the consistent view of the driver's eyes, head, and upper body within the field of view of the image capturing device enables more accurate and reliable monitoring of driver state, including alertness and attentiveness. This enhanced monitoring capability significantly improves overall vehicle safety, potentially reducing accidents caused by driver fatigue or distraction. The pan-tilt-zoom mechanism adapts the field of view of the image capturing device with the different driver sizes and seating positions, ensuring optimal coverage for a wide range of drivers.

In an aspect of the present disclosure, the pan-tilt-zoom mechanism provides any one of a horizontal adjustment range, a vertical adjustment range, a zoom capability for the image capturing device and any combination thereof.

In an aspect of the present disclosure, the horizontal adjustment range of the pan-tilt-zoom mechanism may be 12 degrees.

In an aspect of the present disclosure, the vertical adjustment range of the pan-tilt-zoom mechanism may be 35 degrees.

The present disclosure offers customizable field of view of the image capturing device through adjustable horizontal and vertical ranges, along with zoom capability. This allows for fine-tuning of the image capture to suit specific monitoring requirements. Additionally, the control

In an aspect of the present disclosure, the control unit is configured to adjust the field view of the image capturing device using the pan-tilt-zoom mechanism based on the detected driver position ensures the system remains effective even during driver movement. In another aspect, preferably, the driver's eyes, head and/or upper body is/are adjusted towards a centre of the field of view of the image capturing device by the control unit.

In an aspect of the present disclosure, the image capturing device may be suspended from a ceiling of the cabin within the defined area or coupled to a windscreen of the vehicle within the defined area. Thus, the suspended installation from the cabin ceiling or coupling to the windscreen maximize interior space utilization while maintaining the device's functionality, resulting in a space-efficient design.

In an aspect, the image capturing device is configured with a driver monitoring system of the vehicle. This adds versatility to the vehicle, as it can be integrated into existing driver state sensing systems, enhancing the capabilities of the vehicle without requiring a complete overhaul. The non-intrusive nature of the monitoring may be maintained by positioning the device above the driver's eye anatomical viewing limit and/or sideways to the driver's field of vision, thus minimizing distraction and maintaining a comfortable driving environment.

By capturing the driver's upper body in addition to the face, the driver monitoring system allows for more comprehensive analysis of driver behaviour and state. This innovative approach addresses many of the limitations of existing driver monitoring solutions, offering a more adaptable, effective, and user-friendly approach to enhancing vehicle safety through improved driver monitoring.

In short, the present disclosure provides advantages herein below, but not limited to:
- Adaptability to various driver sizes and positions
- Efficient single- image capturing device solution
- Universal application across different vehicle models
- Improved accuracy in driver state detection
- Optimization of limited cabin space
- Enhanced vehicle safety
- Cost-effectiveness compared to multi- image capturing device systems
- Positioning of the image capturing device does not hamper field of view of the driver while driving the vehicle

It should be understood that any one of the described features and/or embodiments of the disclosure may be used separately or in combination with other disclosed features and/or embodiments. The term "at least one" refers to one or a plurality and may be even understood as "all of".

Other aspects, advantages, and salient features of the present disclosure will become apparent to those skilled in the art from the following detailed description disclosing one or more embodiments of the present disclosure by way of example only, which taken in conjunction with the annexed drawings, discloses exemplary embodiments of the disclosure, wherein:
FIG. 1 illustrates a vehicle with a cabin, in accordance with an embodiment;
FIG. 2 illustrates an interior view of the vehicle cabin, in accordance with an embodiment;
FIG. 3 illustrates a top view of the vehicle cabin, showing the defined area for the image capturing device placement in vertical planes, in accordance with an embodiment;
FIG. 4 illustrates a defined area inside the cabin, bounded by a first vertical plane, a second vertical plane, and a horizontal plane, in accordance with another embodiment;
FIG. 5 illustrates a side view of the vehicle cabin, showing the defined area for the image capturing device placement in the horizontal plane, in accordance with an embodiment; and
FIG. 6 depicts a block diagram of the driver monitoring system for the vehicle, in accordance with an embodiment.

The drawings referred to in this description are not to be understood as being drawn to scale except if specifically noted, and such drawings are only exemplary in nature.

The foregoing objects, features and advantages of the present disclosure will become more apparent from the following detailed description related to the accompanying drawings. However, various modifications may be applied to the present disclosure, and the present disclosure may have various embodiments of the present disclosure. Hereinafter, specific embodiments of the present disclosure, which are illustrated in the drawings, will be described in detail.

In the drawings, the thicknesses of layers and regions may be exaggerated for clarity. When it is indicated that an element or layer is "on" or "above" another element or layer, this comprises a case in which another layer or element is interposed therebetween as well as a case in which the element or layer is directly above the other element or layer. In principle, reference signs designate elements throughout the specification. In the following description, like reference signs are used to designate elements, which have the same function within the same idea illustrated in the drawings of each embodiment of the present disclosure.

When detailed description of known functions or configurations related to the present disclosure is deemed to unnecessarily blur the gist of the disclosure, the detailed description thereof will be omitted. Also, numerals (e.g., first, second, etc.) used in the description herein are merely identifiers for distinguishing one element from another element.

The following detailed description of illustrative embodiments is better understood when read in conjunction with the appended drawings. To illustrate the present disclosure, exemplary constructions of the disclosure are shown in the drawings. However, the present disclosure is not limited to a specific device, or a tool and instrumentalities disclosed herein.

Reference in this specification to "one embodiment" or "an embodiment" means that a particular feature, structure, or characteristic described in connection with the embodiment is included in at least one embodiment of the present disclosure. The appearances of the phrase "in an embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not for other embodiments.

Moreover, although the following description contains many specifics for the purposes of illustration, anyone skilled in the art will appreciate that many variations and/or alterations to said details are within the scope of the present disclosure. Similarly, although many of the features of the present disclosure are described in terms of each other, or in conjunction with each other, one skilled in the art will appreciate that many of these features can be provided independently of other features. Accordingly, this description of the present disclosure is set forth without any loss of generality to, and without imposing limitations upon, the present disclosure.

In addition, the terms "module" and "unit" used to refer to elements in the following description are given or used in combination only in consideration of ease of writing the specification, and the terms themselves do not have distinct meanings or roles.

Furthermore, the use of a singular term, such as, "a" is not to be interpreted as limiting the number of components or details of components. Additionally, various terms and/or phrases describing or indicating a position or directional reference such as, but not limited to, "top", "bottom", "front", "rear", "forward", "rearward", "end", "outer", "inner", "left", "right", "vertical", "horizontal", etc. may relate to one or more particular components as seen generally from a user's vantage point during use or operation, and such terms and/or phrases are not to be interpreted as limiting, but merely as a representative basis for describing the disclosure to one skilled in the art. In addition, the suffix "region", "part", "unit" for a component used in the following description are given or mixed in consideration of only the ease of writing the specification, and do not have meanings or roles distinguished from each other.

While the present disclosure is illustrated in the context of a four-wheeled vehicle, however, holding structure and aspects and features thereof can be used with other types of vehicles such as a two-wheeled vehicle, three-wheeled vehicle, six-wheeled vehicle, eight-wheeled vehicle, etc. as well. In illustrated embodiments, it is to be noted that terms such as "four-wheeled vehicle" and "vehicle" are interchangeably used throughout the description.

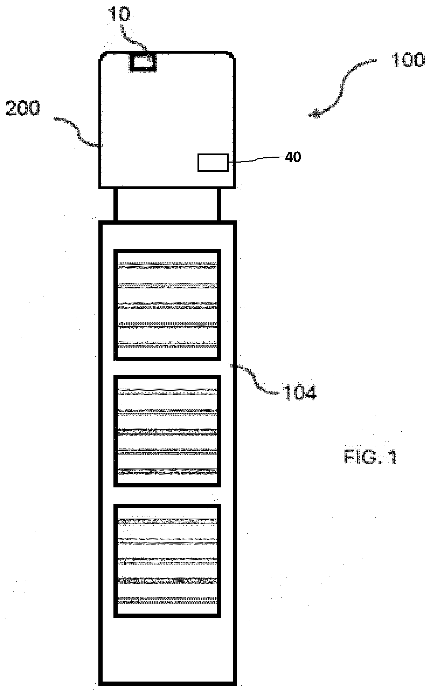

Various example embodiments of the present invention are described hereinafter with reference to FIG. 1 to FIG. 6.

Referring to Figure 1, a vehicle 100 is disclosed. The vehicle 100 referred to herein embodies a four-wheeled vehicle (such as a commercial vehicle). Alternatively, the vehicle 100 may embody other vehicles such as two-wheeled vehicles, three-wheeled vehicles, six-wheeled vehicles, eight-wheeled vehicles, all-terrain vehicles (ATVs), *etc.,* without limiting the scope of the invention. The vehicle 100 includes a vehicle cabin 200 and a trailer 104. The vehicle cabin 200 includes a driver seat *(not shown)* for providing seating for a driver. In addition, the vehicle cabin 200 may include at least one passenger seat (*not shown in Figures*) for providing seating to a passenger. An image capturing device 10 positioned anywhere within a defined area in the cabin 200. In an embodiment, image capturing device 10 having a field of view towards an inner side of the vehicle cabin 200, preferably directed to the driver. A control unit 40 may be positioned inside the vehicle cabin 200 and operationally coupled with the image capturing device 10. In an embodiment, the control unit 40 configured to control/adjust the field of view of the image capturing device 10 in an event of a movement of the driver.

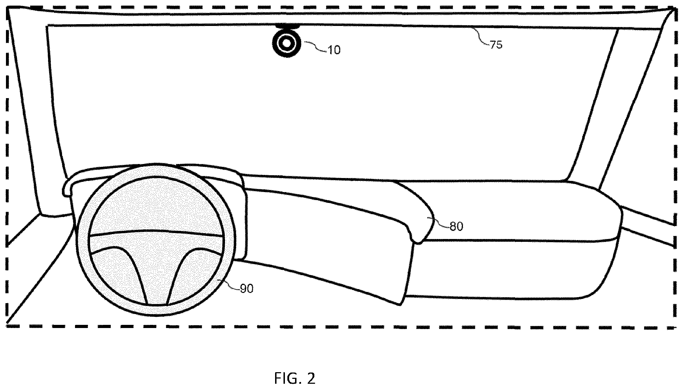

Referring to Figure 2, the interior of the vehicle cabin 200 comprising a dashboard 80 configured inside the vehicle cabin (200), preferably may be located at the front of the cabin 200. The dashboard 80 may house various instruments clusters, controls, and displays essential for vehicle operation. The interior of the vehicle cabin 200 may further comprise a steering wheel 90 which may be positioned within the vehicle cabin (200) for steering the vehicle (100), preferably which may be positioned in front of the driver's seat and configured to control the driving direction of the vehicle 100. In an embodiment, the steering wheel 90 serves as a reference point for defining the position of the image capturing device 10. The vehicle cabin 200 may further comprise a ceiling 75 that defines an upper limiting surface of the vehicle cabin 200, from which the image capturing device 10 may be suspended.

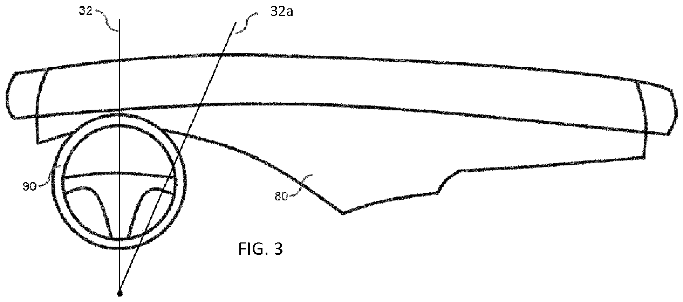

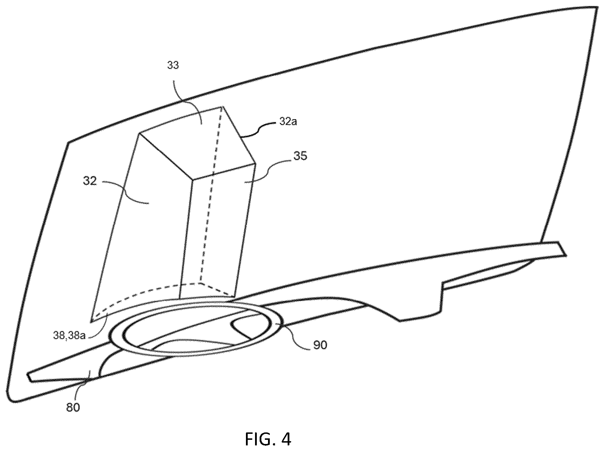

Referring to Figures 3 and 4, the present disclosure relates to the vehicle 100 configured to enhance driver monitoring and safety through an integration of the image capturing device 10 strategically positioned within the vehicle cabin 200. The image capturing device 10 may be positioned within a defined area in the vehicle cabin 200. The defined area is not arbitrarily chosen but is carefully delineated by the vertical and horizontal conceptual planes. The vertical boundaries may be established by a first vertical plane 32 and a second vertical plane 32a. The first vertical plane 32 and the second vertical plane 32a are defined relative to the steering wheel 90, such that: in a left-side driving configuration of the vehicle 100, the first vertical plane 32 and the second vertical plane 32a are both positioned to the right of a centre the steering wheel 90 and/or in a right-side driving configuration of the vehicle 100, the first vertical plane 32 and the second vertical plane 32a are positioned to the left of the centre the steering wheel 90. Thus, the defined area in the vertical plane may start from the first vertical plane 32 and may end at the second vertical plane 32a. Therefore, the first vertical plane 32 may be defined from a centre of the steering wheel 90 either side based on the driving side configuration of the vehicle 100. In another embodiment, the first vertical plane 32a (denoted by dashed line in Figure 3) may be defined from 5 degrees from the centre of the steering wheel 90 on either side based on the driving side configuration of vehicle. The second vertical plane 32a may be defined from 25 degrees from the centre of the steering wheel 90 either side based on the driving side configuration of vehicle 100. It is well known that for a left-hand drive vehicle 100, where the steering wheel 90 is on the left, the second vertical plane 35 is defined to the right of the steering wheel 90. Conversely, in a right-hand drive configuration, the second vertical plane 32a is positioned to the left of the steering wheel 90. A plane 35 is extended till an edge of the dashboard 80.

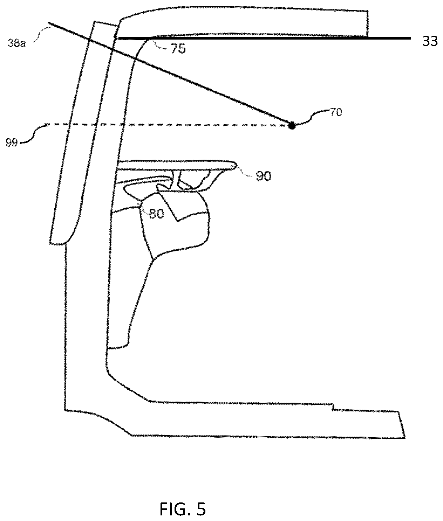

Referring to Figures 4 and 5, in an embodiment, the first horizontal plane 38, 38a may be defined by the dashboard 80 or the first horizontal plane 38, 38a may be by an upper anatomical viewing limit for a driver's eye 70. In another embodiment, the anatomical viewing limit for a driver's eye ranges from 20 degrees to 45 degrees from a horizontal line 99 substantially parallel to a ground, preferably 23 degrees to 43 degrees from the horizontal line 99 substantially parallel to a ground. This keeps the image capturing device 10 above the driver's field of vision or view.

In an embodiment, the second horizontal plane defined 33 may be defined as an upper limiting surface of the vehicle cabin 200. In an embodiment, the upper limiting surface 75 may be the ceiling 75 of the vehicle cabin 200.

Thus, the vertical and horizontal planes may create a three-dimensional space within the vehicle cabin 200 where the image capturing device 10 may be optimally positioned to monitor the driver while minimizing interference with the driver's field of vision or the vehicle's 100 interior design. This careful positioning of the image capturing device 10 within the vehicle cabin's interior ensures effective monitoring of the driver without compromising the functionality, aesthetics, or safety features of the vehicle's 100 interior.

Fig. 5 illustrates a side view of the vehicle cabin 200, in another embodiment. In this another embodiment, the first horizontal plane 38a may start from 23-degrees from the driver's eye position 70 as the lower limit and may extent upwardly to the second horizontal plane 33 defined by the upper limiting surface of the cabin 200.

Thus, the image capturing device 10 may be suspended from a ceiling 75 of the vehicle cabin 200, coupled to a windscreen of the vehicle 100 within the defined area, or the area above the rearview mirror (not shown). The dashboard 80 and the steering wheel 90 serve as important reference points for the defined area, anchoring the system's positioning relative to the driver's typical location.

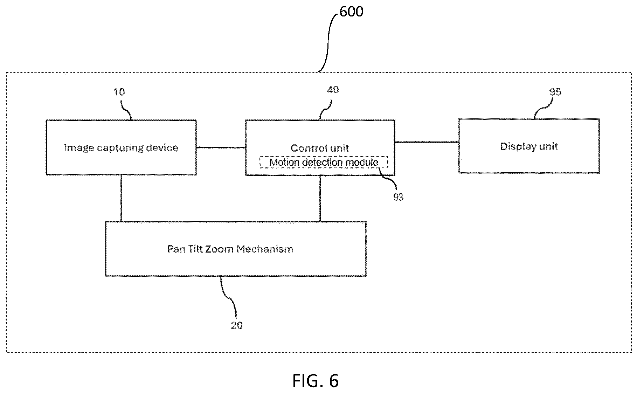

Fig. 6 illustrates a block diagram of the driver monitoring system 600 configured with the vehicle 100. Generally, the driver monitoring system 600, as used herein, may include any system configured to provide monitoring information related to the driver of the vehicle 100. More particularly, the driver monitoring system 600 ascertains, retrieves and/or obtain information about a driver, for example, information about a driver state or information to assess a driver state. The driver monitoring system 600 may include, but are not limited to, optical devices, thermal devices, autonomic monitoring devices as well as any other kinds of devices, sensors or systems. More specifically, the driver monitoring system 600 may include vehicular monitoring system, physiological monitoring system, behavioural monitoring system, and at least one sensor (*not shown*).

In some cases, monitoring information may be received directly from the sensor, rather than from a system or component designed for monitoring a driver state. In some cases, monitoring information may be received from both the sensor and the driver state.

In an embodiment, the image capturing device 10 may be configured as the sensor with the driver monitoring system 600 of the vehicle 100. The driver monitoring system 600 comprising the control unit 40, the image capturing device 10, a pan-tilt-zoom mechanism 20 and a display unit 95. The pan-tilt-zoom mechanism 20, connected to both the control unit 40 and the image capturing device 10. In an embodiment, the control unit 40 may be integral part of the image capturing device 10. In another embodiment, the control unit 40 may be a specialized processing unit placed outside of the image capturing device 10. The control unit 40 is configured with a motion detection module 93. The motion detection module (93) is configured to detect the movement of the driver, preferably the driver's eyes, head and/or upper body of the driver. This enables adjustment of the field of view of the image capturing device 10 based on the detected driver position, in particular driver's eyes, head, and upper body position.

In an embodiment, the image capturing device 10 is configured with a pan-tilt-zoom mechanism 20 to allow adjustment of the field of view of the image capturing device 10, by the control unit 40, based on the movement of the driver. In another embodiment, the control unit (40) adjusts the field of view of the image capturing device (10) towards a driver's eyes, head, and/or upper body in the event of detection of the movement of the driver, preferably the driver's eyes, head and/or upper body is/are adjusted toward/s a centre of the field of view of the image capturing device (10). In still another embodiment, the control unit 40 may be configured to adjust the field of view of the image capturing device 10 via the pan-tilt-zoom mechanism 20 based on detected positions of the driver's eyes, head, and/or upper body. In an embodiment, the pan-tilt-zoom mechanism 20 may be configured to adjust the field of view of the image capturing device 10 in at least two degrees of freedom, preferably in a horizontal or vertical direction. In another embodiment, the pan-tilt-zoom mechanism 20 is configured to adjust the field of view of the image capturing device 10 in at least three degrees of freedom, preferably in a horizontal direction, a vertical direction or a depth. In still another embodiment, the pan-tilt-zoom mechanism 20 provides any one of a horizontal adjustment range, a vertical adjustment range, a zoom capability for the image capturing device 10 and any combination thereof. The control unit 40 serves as a processing unit, managing the driver monitoring system 's operations. The driver monitoring system 600 also includes the display unit 95 for providing feedback or alerts to the driver. A vehicle communication interface (*not shown*) connects the monitoring system to other vehicle systems for integrated functionality. Additionally, the driver monitoring system 600 may be configured with a data storage component for recording and storing captured images or processed data, a power supply (*not shown*) providing electrical power to the system components, and a communication module (*not shown*) for potential connectivity with external systems or data transmission.

The display unit 95 serves as the interface between the driver monitoring system 600 and the vehicle occupants. In an embodiment, the display unit 95 may show real-time feedback on driver state or alert messages when the potential issues detected by the driver detection module. The display unit 95 can be integrated into the vehicle's dashboard 80 or infotainment system for seamless presentation of information. The display unit 95 may include a TFT or HD type screen for clear visibility in various lighting conditions and may be customized to show different levels of information based on user preferences or regulatory requirements. In an embodiment, the image capturing device 10 is configured to capture images and share captured images for driver monitoring or assessment of driver alertness and providing feedback on a display unit 95.

The pan functionality configures the field of view of the image capturing device 10 to move horizontally. In an embodiment, the horizontal adjustment range of the pan-tilt-zoom mechanism 20 may be varied from 5 degrees to 15 degrees, preferably covering a 12-degree range of motion horizontally. This horizontal adjustment of the field of view may be particularly useful when the driver shifts laterally in their seat or when different drivers of varying physical builds use the vehicle. The aforementioned ranges ensures that the field of view of the image capturing device 10 may track these lateral movements while staying within the bounds defined by the first vertical plane 32 and the second vertical plane 35.

Further, the tilt functionality configures the field of view of the image capturing device 10 to move vertically. In an embodiment, the vertical adjustment range of the pan-tilt-zoom mechanism 20 is varied from 25 degrees to 45 degrees, preferably covering a 35-degree range of adjustment vertically. This vertical range may be critical for accommodating drivers of different heights, as well as accounting for various seat height adjustments and driving postures. Irrespective of the driver's built or seating position such as the driver may be tall, short or the driver may be sitting upright or reclined, the tilt function ensures that the driver's face and upper body remain in the image capturing device's 10 field of view.

Furthermore, the zoom functionality of the pan-tilt-zoom mechanism 20 configures the field of view of the image capturing device 10 to adjust its focal length, effectively moving closer to or farther from the subject without physical displacement. This feature may help in maintaining a clear and detailed view of the driver's eyes and facial features in the field of view, regardless of their exact position within the cabin 200. The zoom capability of the image capturing device 10 may be software driven or optically driven.

Therefore, the pan-tilt-zoom mechanism 20 configures the image capturing device 10 to dynamically adapt to a wide range of driver positions and movements. For example, if the driver leans to one side, the pan function may shift or adjusts the field of view of the image capturing device's view accordingly. If the driver adjusts their seat height, the tilt function compensates to keep their face centred in the field of the view. And if the driver moves slightly forward or backward, the zoom function can adjust the field of view to maintain the appropriate level of details about torso of the driver.

In another embodiment, the control unit 40 processes image data from the image capturing device 10 to detect changes in the driver's position or movement and then sends instructions to the pan-tilt-zoom mechanism 20 to make the necessary adjustments in a real-time. This continuous, adaptive process ensures that the driver's eyes, head, and upper body remain in focus and properly framed in the field of view of the image capturing device 10.

By providing a high level of flexibility and responsiveness, the pan-tilt-zoom mechanism 20 significantly enhances the effectiveness of the driver monitoring system 600. The pan-tilt-zoom mechanism 20 allows for consistent, high-quality image capture across a wide range of scenarios, contributing to more accurate driver state assessment and, ultimately, improved vehicle safety.

Therefore, other implementations, other embodiments of the present disclosure, and those equivalent to the claims also fall within the claims to be described below.

### List of reference numerals

10 - Image capturing device
20 - Pan-tilt-zoom mechanism
32 - First vertical plane
32a- Second vertical plane
33 - Second horizontal plane
35 - Plane
38, 38a- First horizontal plane
40 - Control unit
70- Driver eye position
75 - Ceiling
80 - Dashboard
90 - Sterring wheel
93 - Motion detection module
99 - Horizontal line
95 - Display unit
100 - Vehicle
104 - Trailer
200 - Vehicle cabin
600 - Driver monitoring system

## Claims

1. A vehicle (100) comprising:
∘ a vehicle cabin (200);
∘ a dashboard (80) configured inside the vehicle cabin (200);
∘ a steering wheel (90) positioned within the vehicle cabin (200) for steering the vehicle (100);
∘ an image capturing device (10) positioned within a defined area of the vehicle cabin (200) and having a field of view towards an inner side of the vehicle cabin (200), preferably directed to a driver,
wherein the defined area is bounded by:
∘ a first vertical plane (32) and a second vertical plane (32a) are defined relative to a centre of the steering wheel (90), such that:
∘ in a left-side driving configuration of the vehicle (100), the first vertical plane (32) and the second vertical plane (32a) are both positioned to a right from the centre of the steering wheel (90) and/or
∘ in a right-side driving configuration of the vehicle (100), the first vertical plane (32) and the second vertical plane (32a) are both positioned to a left from the centre of the steering wheel (90);
∘ a substantially first horizontal plane (38, 38a) and a substantially second horizontal plane (33), wherein the first horizontal plane (38) is defined by the dashboard (80) or by an upper anatomical viewing limit (38a) for a driver's eye (70), and the second horizontal plane is defined (33) by an upper limiting surface of the vehicle cabin (200); and
∘ a control unit (40) configured to control/adjust the field of view of the image capturing device (10) in an event of a movement of the driver.

2. The vehicle (100) according to claim 1, wherein the first vertical plane (32) is defined 5 degrees from a centre of the steering wheel (90), and/or the second vertical plane (32a) is defined 25 degrees from the centre of the steering wheel (90).

3. The vehicle (100) according to claim 1, wherein the anatomical viewing limit for a driver's eye ranges from 20 degrees to 45 degrees from a horizontal line substantially parallel to a ground, preferably 23 degrees to 43 degrees from a horizontal line (99) substantially parallel to a ground.

4. The vehicle (100) according to claim 1, wherein
the image capturing device (10) is configured with a pan-tilt-zoom mechanism (20) to allow adjustment of the field of view of the image capturing device (10), by the control unit (40), based on the movement of the driver.

5. The vehicle (100) according to any of the preceding claims, wherein the pan-tilt-zoom mechanism (20) is configured to adjust the field of view of the image capturing device (10) in at least two degrees of freedom or at least three degrees of freedom.

6. The vehicle (100) according to any of the preceding claims, wherein the pan-tilt-zoom mechanism (20) provides any one of a horizontal adjustment range, a vertical adjustment range, a zoom capability for the image capturing device (10) and any combination thereof.

7. The vehicle (100) according to claim 6, wherein
∘ the horizontal adjustment range of the pan-tilt-zoom mechanism (20) is varied from 5 degrees to 15 degrees, preferably 12 degrees; and/or
∘ the vertical adjustment range of the pan-tilt-zoom mechanism (20) is varied from 25 degrees to 45 degrees, preferably 35 degrees.

8. The vehicle (100) according to any of the preceding claims, wherein
∘ the control unit (40) is configured with a motion detection module (93),
∘ wherein the motion detection module (93) is configured to detect the movement of the driver, preferably the driver's eyes, head and/or upper body of the driver.

9. The vehicle (100) according to any of the preceding claims, wherein the control unit (40) adjusts the field of view of the image capturing device (10) towards a driver's eyes, head, and/or upper body in the event of detection of the movement of the driver, preferably the driver's eyes, head and/or upper body is/are adjusted toward/s a centre of the field of view of the image capturing device (10).

10. The vehicle (100) according to any of the preceding claims, wherein the image capturing device (10) is suspended from a ceiling (75) of the vehicle cabin (200) or coupled to a windscreen of the vehicle (100) within the defined area.

11. The vehicle (100) according to any of the preceding claims, wherein the image capturing device (10) is configured with a driver monitoring system (600) of the vehicle (100).

12. The vehicle (100) according to any of the preceding claims, wherein the image capturing device (10) is configured to capture images of the driver and providing feedback on a display unit (95).
